# EUROPÄISCHE PATENTSCHRIFT

(11) **EP 3 525 280 B1**
(45) Veröffentlichungstag und Bekanntmachung des Hinweises auf die Patenterteilung: **07.04.2021**
(21) Anmeldenummer: 19156284.2
(22) Anmeldetag: 08.02.2019
(51) Int. Cl.: H01M 10/625, H01M 10/6556, H01M 10/6568, H01M 10/613

(54) **FLUIDVERTEILERMODUL FÜR EIN MODULARES TEMPERIERSYSTEM UND TEMPERIERSYSTEM**
FLUID DISTRIBUTOR MODULE FOR A MODULAR TEMPERATURE-REGULATING SYSTEM AND TEMPERATURE-REGULATING SYSTEM
MODULE DE DISTRIBUTION DE FLUIDE POUR UN SYSTÈME DE MISE EN TEMPÉRATURE MODULAIRE ET SYSTÈME DE MISE EN TEMPÉRATURE

(30) Priorität: 09.02.2018 DE 102018102927
(43) Veröffentlichungstag der Anmeldung: 14.08.2019
(73) Patentinhaber: Voss Automotive GmbH, 51688 Wipperfürth (DE)
(72) Erfinder: GRAMCKOW, Erik, 53757 St. Augustin (DE); KOLBERG, Ralf, 50733 Köln (DE); DE BEER, Daniel, 51766 Engelskirchen (DE)
(74) Vertreter: Patent- und Rechtsanwälte Dr. Solf & Zapf

(56) Entgegenhaltungen:
- EP-A1- 2 980 882
- EP-A1- 3 188 303
- WO-A1-2017/095172
- DE-A1- 10 245 600
- DE-U1-202015 103 455
- US-A1- 2013 056 107

## Beschreibung

Die vorliegende Erfindung betrifft ein Fluidverteilermodul für ein modulares Temperiersystem eines Energiespeichers, insbesondere ein Kühlsystem für Fahrzeugbatterien, mit mindestens einer ersten Modulschnittstelle zum Anschluss an mindestens ein weiteres Fluidverteilermodul, mindestens einer ersten Verteilerschnittstelle zum Anschluss an mindestens ein Kühlelement und mindestens einen Fluidkanal sowie ein Temperiersystem.

Batterien bzw. Akkuzellen von Elektro- und Hybridfahrzeugen müssen in einem definierten Temperaturfenster betrieben werden, um deren Haltbarkeit zu gewährleisten und eine Schädigung zu vermeiden. Aus dem Stand der Technik bekannte Temperiersysteme weisen durchströmbare Kühlplatten, insbesondere Aluminium-Kühlplatten, auf, an denen die Akkuzellen positioniert sind. Die Größe und Anzahl der Kühlplatten ist abhängig von der Geometrie und Anzahl der Akkuzellen.

Um eine homogene Temperierung zu ermöglichen, werden die Kühlplatten typischerweise einzeln mit einem Temperiermedium, beispielsweise einem Gemisch aus Wasser und Glykol, durchströmt. Die Zu- und Abläufe der Kühlplatten werden jeweils in eine Sammelleitung als Vor- bzw. Rücklauf geführt.

Neben der Verteilung des Temperiermediums auf die einzelnen Kühlplatten muss das Temperiersystem, insbesondere die darin angeordneten Fluidverteilermodule, die Toleranzen zwischen den Kühlplatten und zwischen den Anschlüssen an einer Kühlplatte ausgleichen sowie einen einfachen Ein- und Ausbau ermöglichen.

Aus dem Stand der Technik bekannte Temperiersysteme werden üblicherweise aus einer Vielzahl von einzelnen Verbindern und Rohrstücken montiert. Beispielsweise erfolgt die Montage durch Aufdornen oder Zusammenstecken.

WO 2017/095172 A1 offenbart ein Kühlungssystem für Batterien. Das Kühlungssystem umfasst eine Mehrzahl von Rohrleitungen, die zu einem Fluidsystem verbunden sind. Das Kühlsystem umfasst zumindest zwei unterschiedliche Materialien für die Rohrleitungen. Die geraden Rohrabschnitte sind aus einem härteren Kunststoff gefertigt. Die gekrümmten Rohrabschnitte sind aus einem flexiblen Gummi mit hoher Elastizität hergestellt. Die geraden und die gekrümmten Elemente sind durch thermisches Schrumpfen zusammengefügt.

EP 2 980 882 A1 offenbart einen Rahmen für elektrochemische Zellen mit einem integrierten Kühlkanal. In dem Kühlkanal sind Steckstücke angeordnet, um eine Verbindung herzustellen. Der Rahmen und das Steckstück können aus gleichen oder unterschiedlichen Materialien hergestellt sein.

DE 20 2015 103 455 U1 offenbart ein Verbindungselement zum Verbinden eines Rohres mit einer Komponente einer Klimaanlage. Das Verbindungselement umfasst einen Grundkörper, einen Stutzen und zwei Dichtelemente, wobei die Dichtelemente stoffschlüssig mit dem Stutzen verbunden sind.

EP 3 188 303 A1 offenbart eine Kühleinrichtung, die zwischen einer Mehrzahl von Batteriezellen für ein elektrisches Fahrzeug angeordnet wird. Die Kühleinrichtung umfasst eine oder mehrere Fluidleitungen, die mäanderförmig zwischen den einzelnen Batteriezellen angeordnet werden. Um den Wärmeübergang zwischen den Batteriezellen und dem in den Fluidleitungen führbaren Fluid zu verbessern, ist vorgesehen, an den Fluidleitungen Formkörper anzuordnen, die sich der Kontur der Batteriezellen anpassen.

Die aus dem Stand der Technik bekannten Temperiersysteme weisen dabei den Nachteil auf, dass ein umfangreicher Montageaufwand erforderlich ist, und dass das Vorhandensein einer Vielzahl von Verbindungsstellen das Leckagerisiko steigert.

Der vorliegenden Erfindung liegt daher die Aufgabe zugrunde, ein Fluidverteilermodul für ein modulares Temperiersystem und ein Temperiersystem anzugeben, bei dem der Montageaufwand reduziert ist, und bei dem die Anzahl der Verbindungsstellen reduziert ist.

Die vorgenannte Aufgabe ist bei einem gattungsgemäßen Fluidverteilermodul gelöst durch die kennzeichnenden Merkmale des Anspruchs 1, nämlich dadurch, dass mindestens ein erster Abschnitt des Fluidverteilermoduls aus einem ersten Material und mindestens ein zweiter Abschnitt aus einem, insbesondere von dem ersten Material verschiedenen, zweiten Material gebildet ist, dass der zweite Abschnitt zumindest teilweise eine geringere Steifigkeit als der erste Abschnitt aufweist, und dass der erste Abschnitt und der zweite Abschnitt stoffschlüssig aneinander angeformt sind

Das Fluidverteilermodul ist ein Bauteil zur Herstellung eines fluidführenden Temperiersystems für einen Energiespeicher, bevorzugt eines fluidführenden Kühlsystems für Fahrzeugbatterien, insbesondere zum Leiten eines unter Druck stehenden Fluids. Das Fluidverteilermodul weist mindestens eine erste Modulschnittstelle auf, die dazu ausgebildet und eingerichtet ist, das Fluidverteilermodul mit mindestens einem weiteren Fluidverteilermodul zu verbinden, insbesondere fluidtechnisch zu verbinden. Eine Mehrzahl miteinander verbundener Fluidverteilermodule bilden beispielsweise einen Vor- oder Rücklauf eines Temperiersystems. Alternativ dazu ist auch vorgesehen, dass eine Mehrzahl Fluidverteilermodule für eine serielle Durchströmung von Kühlelementen ausgebildet und angeordnet sind.

Die Modulschnittstelle ist beispielsweise als Steckverbinder, Rastverbinder, Klemmverbinder, Bajonettverschluss oder als anderer lösbarer oder unlösbarer Verbinder ausgebildet. Beispielsweise ist die erste Modulschnittstelle als einzusteckender oder aufnehmender Teil eines Steckverbinders ausgebildet. Die Modulschnittstelle ermöglicht die Herstellung einer dichtenden Verbindung zwischen zwei Fluidverteilermodulen.

Ferner weist das Fluidverteilermodul mindestens eine erste Verteilerschnittstelle auf, die dazu ausgebildet und eingerichtet ist, das Fluidverteilermodul mit mindestens einem Kühlelement, insbesondere mindestens einer Kühlplatte, zu verbinden. Die Verteilerschnittstelle ist beispielsweise als Steckverbinder, Kupplung, Rastverbinder, Klemmverbinder, Bajonettverschluss oder als anderer lösbarer oder unlösbarer Verbinder ausgebildet. Vorzugsweise ist die Verteilerschnittstelle in einem Winkel von 90° zur Modulschnittstelle angeordnet. Das Fluidverteilermodul weist zudem mindestens einen Fluidkanal auf, der sich insbesondere zwischen Modulschnittstelle und Verteilerschnittstelle erstreckt.

Das Fluidverteilermodul zeichnet sich dadurch aus, dass mindestens ein erster Abschnitt des Fluidverteilermoduls aus einem ersten Material und mindestens ein zweiter Abschnitt aus einem, insbesondere von dem ersten Material verschiedenen, zweiten Material gebildet ist, wobei der zweite Abschnitt eine geringere Steifigkeit als der erste Abschnitt aufweist. Unter Steifigkeit wird der Widerstand des ersten und zweiten Abschnitts gegen elastische Verformung durch eine Kraft oder ein Moment verstanden. Die geringere Steifigkeit wird durch die Materialwahl und/oder die geometrische Gestaltung des ersten Abschnitts und/oder des zweiten Abschnittes erreicht. Beispielsweise ist das zweite Material weicher, weist also eine geringere Härte auf, und/oder weist einen kleineren Elastizitätsmodul als das erste Material auf. Insbesondere weist das zweite Material bzw. der zweite Abschnitt einen geringeren Widerstand gegen elastische Verformung als das erste Material bzw. der erste Abschnitt auf. Der zweite Abschnitt bzw. das zweite Material ist vorzugsweise dehnbarer, biegbarer und/oder stauchbarer als das erste Material bzw. der erste Abschnitt. Bevorzugt wird die geringere Steifigkeit des zweiten Abschnitts ausschließlich durch die Materialwahl erzielt, also dadurch, dass das zweite Material weicher als das erste Material ist.

Vorzugsweise begrenzen der erste Abschnitt und/oder der zweite Abschnitt zumindest einen Teil des Fluidkanals. Der erste Abschnitt und der zweite Abschnitt sind aneinander angeformt, insbesondere bei der Herstellung aneinander angeformt. Unter "anformen" ist hier das Herstellen einer stoffschlüssigen Verbindung zu verstehen, die beim Herstellen des ersten und/oder des zweiten Abschnitts ausgebildet wird. Beispielsweise ist der erste Abschnitt an den zweiten oder der zweite Abschnitt an den ersten angeformt oder beide werden gleichzeitig bei der Herstellung aneinander angeformt. Beispielsweise ist das Fluidverteilermodul als Mehrkomponentenbauteil mit einem Mehrkomponenten-Fertigungsverfahren hergestellt, beispielsweise Mehrkomponenten-Spritzguss oder ein additives Herstellungsverfahren, z. B. 3D-Druck. Das Fluidverteilermodul mit dem ersten Abschnitt und dem zweiten Abschnitt ist einstückig aus zwei unterschiedlichen Materialien hergestellt.

Es ist ferner vorgesehen, dass ein vierter oder fünfter Abschnitt ausgebildet ist, wobei der vierte oder fünfte Abschnitt bzw. das Material ebenfalls eine geringere Steifigkeit aufweist als im ersten Abschnitt. Das Fluidverteilermodul weist also eine Mehrzahl flexibler Abschnitte auf, die eine einfache Verformung bei der Montage ermöglichen.

Durch die Verwendung von zwei unterschiedlichen Materialien können verschiedene mechanische Eigenschaften in einem Fluidverteilermodul kombiniert und integriert werden. Dadurch, dass der zweite Abschnitt eine geringere Steifigkeit aufweist, wird die Montage vereinfacht und Toleranzen können durch elastische Verformung des zweiten Abschnitts ausgeglichen werden. Bei der Montage kann eine temporäre Verformung des zweiten Abschnitts auf einfache Weise erfolgen, um das Fluidverteilermodul in seine Einbausituation zu verbringen. Des Weiteren können mit dem zweiten Abschnitt Druckpulsationen im Temperiersystem und eine mögliche Volumenzunahme des Fluids ausgeglichen werden.

Dadurch, dass der erste Abschnitt und der zweite Abschnitt aneinander angeformt sind, wird die Anzahl an Verbindungsschnittstellen und damit das Leckagerisiko reduziert. Gleichzeitig werden auf einfache Weise Reinheits- und Qualitätsanforderungen erfüllt, da keine Nachbearbeitung erforderlich ist. Eine Nachbearbeitung kann insbesondere deshalb entfallen, da nach der Herstellung nur ein einstückiges Bauteil vorliegt.

Ferner ist vorgesehen, dass eine zweite Verteilerschnittstelle zum Anschluss an ein Kühlelement vorhanden ist. Durch die zweite Verteilerschnittstelle kann der Durchfluss durch ein angeschlossenes Kühlelement gesteigert werden. Die zweite Verteilerschnittstelle ist beispielsweise parallel zur ersten Verteilerschnittstelle angeordnet.

Zudem ist vorgesehen, dass die erste Verteilerschnittstelle und die zweite Verteilerschnittstelle am ersten Abschnitt ausgebildet sind. Der erste Abschnitt dient in diesem Fall der Verbindung mit einem Kühlelement, während der zweite Abschnitt und gegebenenfalls der dritte Abschnitt lediglich der Verbindung mit einem weiteren Fluidverteilermodul bzw. der Steigerung der Flexibilität dienen. Es ist auch vorgesehen, dass die erste Verteilerschnittstelle und die zweite Verteilerschnittstelle einstückig mit dem ersten Abschnitt ausgebildet sind und insbesondere aus dem ersten Material ausgebildet sind.

Die Modulschnittstelle gewährleistet zudem ein einfaches Zusammenfügen von mindestens zwei Fluidverteilermodulen, wodurch zwei nebeneinander angeordnete Kühlelemente mit einem Fluid durchströmbar werden. Der modulare Aufbau ermöglicht zudem die Realisierung von Temperiersystemen verschiedenster Größe.

Gemäß einer ersten Ausgestaltung des Fluidverteilermoduls ist vorgesehen, dass eine zweite Modulschnittstelle zum Anschluss an ein weiteres Fluidverteilermodul vorhanden ist, insbesondere dass die zweite Modulschnittstelle am zweiten Abschnitt oder an einem dritten Abschnitt ausgebildet ist. Die zweite Modulschnittstelle ist so ausgebildet, dass eine Verbindung mit einem weiteren Fluidverteilermodul hergestellt werden kann. Beispielsweise ist die zweite Modulschnittstelle als Steckverbinder oder als schlauchförmiges Anschlussstück ausgebildet. Vorzugsweise ist die zweite Modulschnittstelle korrespondierend zur ersten Modulschnittstelle ausgebildet. Vorzugsweise ist die erste Modulschnittstelle als aufnehmender Teil eines Steckverbinders und die zweite Modulschnittstelle als einzusteckender Teil eines Steckverbinders ausgebildet. Zwei Fluidverteilermodule können so auf einfache Weise durch Zusammenstecken mittels der ersten und der zweiten Modulschnittstelle miteinander dichtend verbunden werden. Beispielsweise sind die erste Modulschnittstelle und die zweite Modulschnittstelle in Abschnitten angeordnet, die aus dem ersten Material hergestellt sind. Vorzugsweise sind die erste Modulschnittstelle und die zweite Modulschnittstelle auf einer gemeinsamen Längsachse des Fluidverteilermoduls angeordnet.

Insbesondere um den Herstellungsprozess zu vereinfachen, ist gemäß einer weiteren Ausgestaltung des Fluidverteilermoduls vorgesehen, dass der Fluidkanal zumindest im Verlauf zwischen erster Modulschnittstelle und zweiter Modulschnittstelle einen konstanten Querschnitt aufweist. Insbesondere verläuft der Fluidkanal entlang der Längsachse des Fluidverteilermoduls. Dadurch ist das Fluidverteilermodul beispielsweise bei einer Herstellung durch Spritzgießen auf einfache Weise entformbar. Ferner wird gewährleistet, dass keine Verwirbelungen bzw. Druckverluste erzeugt werden. Vorzugsweise ist die erste Verteilerschnittstelle über einen von dem Fluidkanal mit dem konstanten Querschnitt abgehender Seitenarm des Fluidkanals fluidtechnisch angebunden.

Als besonders vorteilhaft hat sich gemäß einer weiteren Ausgestaltung herausgestellt, wenn vorgesehen ist, dass ein dritter Abschnitt ausgebildet ist, und dass der dritte Abschnitt, insbesondere an den zweiten Abschnitt, angeformt ist. Bevorzugt, dass der zweite Abschnitt zwischen dem ersten Abschnitt und dem dritten Abschnitt angeordnet ist, insbesondere ist vorgesehen, dass der dritte Abschnitt aus dem ersten Material ausgebildet ist. Vorzugsweise sind der erste Abschnitt und der dritte Abschnitt aus dem gleichen Material ausgebildet. Dadurch, dass der zweite Abschnitt zwischen dem ersten Abschnitt und dem dritten Abschnitt ausgebildet ist, wird eine gesteigerte Flexibilität und Beweglichkeit im zweiten Abschnitt gewährleistet, die die Montage vereinfachen.

Der erste Abschnitt, der zweite Abschnitt und der dritte Abschnitt sind jeweils aneinander angeformt, so dass sie einstückig ausgebildet sind, insbesondere gemeinsam hergestellt werden. Dadurch wird die Anzahl an erforderlichen Verbindungsstellen für ein Temperiersystem weiter verringert.

Als besonders vorteilhaft hat sich zudem herausgestellt, wenn vorgesehen ist, dass mindestens ein Abschnitt der ersten Verteilerschnittstelle und/oder der zweiten Verteilerschnittstelle aus dem zweiten Material ausgebildet ist. Vorzugsweise ist der aus dem zweiten Material ausgebildete Abschnitt der ersten oder zweiten Verteilerschnittstelle jeweils an die verbleibenden Abschnitte der jeweiligen Verteilerschnittstelle angeformt, so dass sie einstückig ausgebildet sind. Durch das Vorhandensein eines Abschnitts aus einem zweiten Material mit einer geringeren Steifigkeit als das erste Material wird die Montage des Fluidverteilermoduls vereinfacht. Die zweite Verteilerschnittstelle ist vorzugsweise identisch wie die erste Verteilerschnittstelle ausgebildet.

Vorzugsweise ist gemäß einer weiteren Ausgestaltung zur Vereinfachung der Montage vorgesehen, dass die Länge des zweiten Abschnitts mindestens 5 % der Gesamtlänge des Fluidverteilermoduls, insbesondere zwischen den äußeren Enden der ersten und zweiten Modulschnittstelle, bevorzugt zwischen 5 % und 35 % der Gesamtlänge, entspricht. Aufgrund dieser Mindestlänge kann gewährleistet werden, dass der zweite Abschnitt eine ausreichende Flexibilität bzw. Auslenkbarkeit zur Vereinfachung der Montage aufweist. In diesem Zusammenhang ist gemäß einer weiteren Ausgestaltung zudem vorteilhaft, wenn der zweite Abschnitt eine Länge zwischen 15 mm und 100 mm aufweist.

Es hat sich zudem gemäß einer weiteren Ausgestaltung als vorteilhaft herausgestellt, wenn vorgesehen ist, dass die minimale Länge des zweiten Abschnitts mindestens dem minimalen Innendurchmesser des Fluidkanals zwischen erster Modulschnittstelle und zweiter Modulschnittstelle entspricht. Die Länge des zweiten Abschnitts entspricht folglich mindestens dem kleinsten Durchmesser des Fluidkanals im Verlauf zwischen erster und zweiter Modulschnittstelle. Dadurch wird gewährleistet, dass eine vorteilhafte Montage realisierbar ist.

Das Fluidverteilermodul wird gemäß einer weiteren Ausgestaltung dadurch fortgebildet, dass die erste Verteilerschnittstelle und/oder die zweite Verteilerschnittstelle einen Montageversatz aufweisen, und dass die Länge des zweiten Abschnitts etwa dem doppelten Wert des Montageversatzes entspricht. Der Montageversatz ist der Weg, den die erste Verteilerschnittstelle und/oder die zweite Verteilerschnittstelle beim Aufschieben bzw. Einschieben in bzw. auf ein Kühlelement vollzieht, um fluidtechnisch verbunden zu werden. Dieser Weg entspricht dem Montageversatz. Beispielsweise handelt es sich bei dem Montageversatz um den Steckweg eines Steckverbinders. Dadurch, dass die Länge des zweiten Abschnitts etwa dem doppelten Wert des Montageversatzes entspricht, kann gewährleistet werden, dass eine Mehrzahl von Fluidverteilermodulen nebeneinander und nacheinander auf einfache Weise montierbar sind. Beispielsweise beträgt der Montageversatz zwischen 15 mm und 25 mm, so dass die bevorzugte Länge des zweiten Abschnitts zwischen 30 mm und 50 mm, vorteilhaft 40 mm, entspricht.

Um eine ausreichende Druckfestigkeit des zweiten Abschnitts zu gewährleisten, ist gemäß einer weiteren Ausgestaltung vorzugsweise vorgesehen, dass der zweite Abschnitt außenseitig und/oder innenseitig eine Mehrzahl von, insbesondere radial umlaufenden, Erhebungen, bevorzugt Rippen oder Wellen, aufweist, insbesondere dass der zweite Abschnitt an seiner den Fluidkanal bildenden Innenfläche glatt ausgebildet ist. Die auf der Außenseite und/oder der Innenseite ausgebildeten Erhebungen, insbesondere Rippen oder Wellen, besonders bevorzugt gleichmäßig verteilte Rippen oder Wellen, verstärken die Wandstärke des zweiten Abschnitts lokal, wodurch dessen Druckfestigkeit gesteigert wird. Gleichzeitig wird durch die Beabstandung der Erhebungen zueinander eine Biegbarkeit des zweiten Abschnitts zuverlässig gewährleistet.

Der zweite Abschnitt ist beispielsweise als Wellrohr mit glatter Innenfläche ausgebildet. Durch die glatte Innenfläche werden Verwirbelungen bzw. eine nachteilige Beeinflussung der Strömung verhindert. Insbesondere ist der Innendurchmesser zumindest im zweiten Abschnitt konstant. Zudem kann eine einfache Entformbarkeit beim Herstellen mittels Spritzgießen gewährleistet werden. Die Höhe der Erhebungen ausgehend von der Wandstärke in Bereichen ohne Erhebung entspricht vorzugsweise etwa der Wandstärke, so dass der zweite Abschnitt im Bereich der Erhebungen eine zweifache Wandstärke aufweist.

Es ist ferner gemäß einer weiteren Ausgestaltung bevorzugt, wenn vorgesehen ist, dass die Erhebungen in Form von Wellen unterschiedliche Radien für Wellenberge und Wellentäler aufweisen, insbesondere dass der Abstand zwischen zwei Wellenbergen zwischen 3 mm und 10 mm beträgt. Bei einer derartigen Ausgestaltung hat sich herausgestellt, dass die Verformbarkeit des zweiten Abschnitts bei gleichzeitig ausreichender Druckstabilität zuverlässig gewährleistet werden kann.

Ferner ist gemäß einer weiteren Ausgestaltung der Erfindung vorgesehen, dass die Wandstärke im zweiten Abschnitt zwischen zwei Erhebungen zwischen 5 % und 20 %, insbesondere etwa 7 %, des Innendurchmessers des Fluidkanals im zweiten Abschnitt entspricht, insbesondere des Fluidkanals zwischen der ersten Modulschnittstelle und der zweiten Modulschnittstelle. Diese Mindestwandstärke gewährleistet eine ausreichende Druckfestigkeit im zweiten Abschnitt.

Eine weitere Ausgestaltung der Erfindung sieht vor, dass die Erhebungen, insbesondere auf der Innenseite, in Form von Wellen unterschiedliche Flankenneigungen, insbesondere in Bezug auf eine Längsachse L, an benachbarten Flanken aufweisen. Insbesondere ist ein Wellenprofil mit unterschiedlichen Winkeln der Flanken vorgesehen. Die Flankenneigungen erstrecken sich über den gesamten Umfang, insbesondere sind die Flankenneigungen über den jeweiligen Umfang konstant. Vorzugsweise sind die von einem Ende des zweiten Abschnitts weggeneigten Flanken weniger stark geneigt, als die dem Ende zugewandten bzw. gegenüberliegenden Flanken. Vorzugsweise weisen steilere Flanken einen Winkel α2 zwischen 40° und 75°, bevorzugt 50°, und flachere Flanken einen Winkel α1 zwischen 20° und 40°, bevorzugt 30°, insbesondere zu einer Längsachse L, auf. Die benachbarten Flanken sind grundsätzlich entgegengesetzt zueinander geneigt, allerdings weisen sie betragsmäßig einen anderen Winkel - eine andere Neigung - auf.

Eine gleiche Systematik ergibt sich, wenn die Flanken gewölbt sind und einen Flankenradius aufweisen. Die Flanken mit einem größeren Radius entsprechen den flacheren Flanken und die Flanken mit einem kleineren Radius entsprechen den steileren Flanken. Auf einen kleineren Flankenradius folgt ein größerer Flankenradius und umgekehrt.

Durch die flacheren Flanken bzw. größeren Flankenradien ist eine einfache Entformbarkeit bei der Herstellung entlang der flacheren Flanken bzw. Flanken mit größerem Flankenradius gewährleistet, während die steileren Flanken bzw. kleineren Flankenradien für eine gesteigerte Flexibilität des zweiten Abschnitts sorgen.

Insbesondere um eine Entformung in zwei Richtungen zu ermöglichen, ist vorgesehen, dass mindestens zwei benachbarte Flanken im Verlauf des zweiten Abschnitts mit gleicher Flankenneigung oder gleichem Flankenradius an gegenüberliegenden Flanken vorgesehen sind. Die Flanken mit den unterschiedlichen Flankenneigungen sind so angeordnet, dass ausgehend von jeder Endseite zunächst eine steilere Flanke angeordnet ist. Es ist auch vorgesehen, dass zunächst eine flachere Flanke angeordnet ist. Ausgehend von den beiden Endseiten sind die jeweiligen flacheren Flanken bzw. die steileren Flanken im gleichen Winkel, aber für jede Endseite entgegengesetzt geneigt. Anschließend folgt jeweils eine steilere Flanke auf eine flachere Flanke bzw. umgekehrt. Vorzugsweise in der Mitte des zweiten Abschnitts, insbesondere an einer Symmetrielinie S, treffen zwei entgegengesetzt geneigte flachere Flanken aufeinander. An dieser Stelle erfolgt bei der Herstellung die Entformung in entgegengesetzte Richtungen, so dass eine Entformung vorteilhaft entlang der flacheren Flanken erfolgen kann. Die flacheren Flanken sind in Entformungsrichtung geneigt bzw. angeordnet.

Die Erhebungen mit den flacheren und steileren Flanken bzw. größeren und kleineren Flankenradien sind vorzugsweise zumindest auf der Innenseite angeordnet. Bei konstanter Wandstärke des zweiten Abschnitts sind diese ebenfalls auf der Außenseite angeordnet.

Die Druckfestigkeit im zweiten Abschnitt lässt sich insbesondere dadurch steigern, dass der zweite Abschnitt eine zumindest abschnittsweise, insbesondere im Bereich der Wellentäler, variierende Wandstärke aufweist, vorzugsweise eine in Richtung seines Mittelbereiches ballig ausgebildete Wandstärke aufweist. Folglich variiert die Mindestwandstärke im Bereich der Wellentäler derart, dass die Mindestwandstärke in der Mitte des zweiten Abschnitts am größten ist und in Richtung der beiden Enden abnimmt. Ferner ist vorgesehen, dass die Wandstärke des zweiten Abschnitts ausgehend von einer gleichen Wandstärke an den Enden in Richtung der Mitte zunimmt. Alternativ oder zusätzlich dazu ist vorgesehen, dass der Innendurchmesser ausgehend von den beiden Enden in Richtung der Mitte abnimmt. Dadurch kann eine gute Innendruckresistenz bei gleichzeitig guter Entformbarkeit eines Innenkerns gewährleistet werden.

Es ist auch vorgesehen, dass der zweite Abschnitt eine im Wesentlichen konstante Wandstärke aufweist. Vorzugsweise beträgt die Wandstärke zwischen 0,5 mm und 2 mm, insbesondere 1 mm.

Es ist auch vorgesehen, dass der zweite Abschnitt im Querschnitt eine ballige Wandstärke aufweist, und/oder dass die Innenwandung im drucklosen Zustand nach innen gewölbt ist. Wird das Temperiersystem dann mit einem Druck beaufschlagt, wird der zweite Abschnitt durch den anliegenden Druck derart nach außen gewölbt, dass im druckbeaufschlagten Betriebszustand im zweiten Abschnitt ein konstanter Durchmesser ausgebildet ist.

Die Montage des Fluidverteilermoduls lässt sich insbesondere dadurch weiter vereinfachen, dass das zweite Material eine größere Elastizität und/oder geringere Härte als das erste Material aufweist. Durch diese Ausgestaltung ist das Fluidverteilermodul im zweiten Abschnitt auf einfache Weise verformbar und weist eine geringere Steifigkeit auf, wodurch die Montage an den Kühlelementen vereinfacht wird.

Gemäß einer weiteren Ausgestaltung hat sich zudem als vorteilhaft herausgestellt, wenn das erste Material aus Polypropylen (PP), bevorzugt mit einem Anteil von bis zu 50 % Glasfasern, ist und/oder das zweite Material ein thermoplastisches Elastomer (TPE), bevorzugt mit einer Härte Shore A im Bereich zwischen 40 und 95, besonders bevorzugt 60 und 90.

Der erste und der dritte Abschnitt werden vorzugsweise aus Polypropylen (PP) hergestellt, da bei PP im Vergleich zu Polyamid (PA) die Wasseraufnahme deutlich geringer ist und somit die mechanischen Langzeiteigenschaften besser sind. Ferner weist PP gegenüber PA eine erheblich geringere Quellung in Wasser/Glykol auf, wodurch sich die Spannungen im Betriebszustand reduzieren. Beim Trocknen des Systems (z. B. im Servicefall oder bei längeren Abstellzeiten) wird das Risiko von möglichen Spannungsrissen infolge der Rücktrocknung ausgeschlossen. In Abhängigkeit der erforderlichen Festigkeit wird der erste Abschnitt und/oder der dritte Abschnitt nach Bedarf mit einem Glasfaseranteil verstärkt (bis zu 50%).

Der zweite Abschnitt wird vorzugsweise aus einem thermoplastischen Elastomer (TPE) hergestellt, das eine stoffschlüssige bzw. chemische Verbindung zum ersten bzw. dritten Abschnitt aufweist. Hierzu wird ein TPE mit einem geringen Druckverformungsrest bzw. hoher Kriechbeständigkeit verwendet, um die Aufweitung des Ausgleichselementes unter Innendruckbelastung zu minimieren. Über die Shore-Härte des TPE kann der Werkstoff anwendungsspezifisch an die Druckanforderungen des Temperiermediums im Temperiersystem angepasst werden. Durch diese Materialwahl wird sichergestellt, dass das Fluidverteilermodul eine hohe Druckfestigkeit bei gleichzeitig montagefreundlichen Materialeigenschaften aufweist.

Ferner ist vorzugsweise vorgesehen, dass das zweite Material ein thermoplastisches Polyolefin (TPO) oder ein thermoplastischen Polyolefine-Vulkanisat (TPV) ist oder der zweite Abschnitt ein derartiges Material aufweist. Vorzugsweise ist der zweite Abschnitt aus einem thermoplastischen Polyolefin (TPO) oder einem thermoplastischen Polyolefine-Vulkanisat (TPV) hergestellt. Insbesondere weist der zweite Abschnitt eine Shore-Härte größer gleich 35D, bevorzugt 40D, auf. Dadurch kann eine gute Langzeit-Innendruckbeständigkeit bei guter Haftung zum ersten Abschnitt erreicht werden.

Ferner ist gemäß einer weiteren Ausgestaltung vorgesehen, dass das zweite Material strahlvernetzt ist. Das zweite Material bzw. der zweite Abschnitt ist mindestens einer Strahlvernetzung unterzogen worden. Bei der Strahlvernetzung lösen beispielsweise energiereiche Beta- oder Gammastrahlen chemische Reaktionen in dem Kunststoff aus und führen zu einer Vernetzung der Moleküle. Das hat den Vorteil, dass eine gute Innendruckfestigkeit bei gleichzeitig guter Langzeit-Kriechbeständigkeit und Temperaturbeständigkeit erreicht wird.

Des Weiteren hat sich gemäß einer weiteren Ausgestaltung als vorteilhaft herausgestellt, wenn das erste Material Polyamid 6.10 (PA 6.10) oder Polyamid 12 (PA 12) und/oder das zweite Material ein thermoplastisches Elastomer auf Urethanbasis (TPU) ist, bevorzugt mit einer Glasfaserfüllung, besonders bevorzugt mit einer Härte Shore D größer gleich 50.

Es ist auch vorgesehen, den ersten Abschnitt - wie vorstehend beschrieben - aus Polypropylen auszubilden und den zweiten Abschnitt aus einem thermoplastischen Elastomer auf Urethanbasis auszubilden. Gleichermaßen ist auch eine Kombination von Polyamid, beispielsweise PA 6.10 oder PA 12, im ersten Abschnitt und einem thermoplastischen Elastomer im zweiten Abschnitt vorgesehen. Bei einer Kombination von Polypropylen mit einem thermoplastischen Elastomer auf Urethanbasis wird eine - zumindest lokale - Plasmaaktivierung des Polypropylen durchgeführt.

TPU weist zum einen eine sehr gute Langzeitfestigkeiten auf und kann zum anderen durch Glasfaserverstärkungen hinsichtlich der Innendruckresistenz optimiert werden. TPU als Werkstoff erfordert PA als Material im ersten Abschnitt, um eine robuste Verbindung zu erreichen. In diesem Fall kommt PA 6.10 bzw. PA12 zum Einsatz, da diese Polyamide eine deutlich geringere Wasseraufnahme im Vergleich zu PA6 bzw. PA6.6 Typen haben. PA6.10 hat im Vergleich zum PA12 bessere mechanische Eigenschaften und eine höhere Temperaturbeständigkeit. Auch diese Materialwahl gewährleistet gute Materialeigenschaften bei gleichzeitiger Montagefreundlichkeit.

Die Stabilität des Fluidverteilermoduls und der Verbindung zwischen den Abschnitten lässt sich insbesondere dadurch steigern, dass die Fläche in einem Kontaktbereich zwischen dem ersten Abschnitt und dem zweiten Abschnitt und/oder zwischen dem zweiten Abschnitt und dem dritten Abschnitt, insbesondere gegenüber einer kreiszylindrischen Fläche, vergrößert ist, vorzugsweise durch Wellen und Vorsprünge und/oder Rücksprünge. Die Abschnitte sind jeweils aneinander angeformt, so dass die Vergrößerung der Kontaktfläche zu einer größeren Fläche für eine stoffschlüssige Verbindung führt. Ferner ist auch vorgesehen, dass in einem Kontaktbereich zwischen dem ersten Abschnitt und dem zweiten Abschnitt und/oder dem zweiten Abschnitt und dem dritten Abschnitt eine Nut-Feder-Geometrie, vorzugsweise mit mindestens einer Nut und mindestens einer Feder, ausgebildet ist. Durch eine Nut-Feder-Geometrie lässt sich ein zusätzlicher Formschluss erzeugen, der sich positiv auf die Stabilität des Fluidverteilermoduls auswirkt.

Vorzugsweise um das Fluidverteilermodul im Einbau zu fixieren, ist gemäß einer weiteren Ausgestaltung vorgesehen, dass mindestens ein Halterahmen ausgebildet ist, insbesondere dass der Grundkörper mindestens einen Halterahmen aufweist.

Vorzugsweise erstreckt sich der Halterahmen auf der zu den Verteilerschnittstellen gegenüberliegenden Seite. Der Halterahmen ist beispielsweise als Bügel ausgebildet und weist mindestens eine Durchgriffsöffnung auf.

Gemäß einer weiteren Ausgestaltung des Fluidverteilermoduls ist vorgesehen, dass an der ersten Modulschnittstelle und/oder an der zweiten Modulschnittstelle und/oder an der ersten Verteilerschnittstelle und/oder an der zweiten Verteilerschnittstelle mindestens eine Dichtung angeformt ist. Vorzugsweise wird die Dichtung bereits bei der Herstellung angeformt, so dass das Fluidverteilermodul unmittelbar verwendbar ist. Dadurch, dass die Dichtung angeformt ist, ist sie bereits vorteilhaft stoffschlüssig mit der jeweiligen Schnittstelle verbunden, wodurch eine zuverlässige Dichtigkeit gewährleistet ist.

Besonders bevorzugt ist eine Verwendung mindestens eines aus mindestens zwei Komponenten hergestellten, erfindungsgemäßen Fluidverteilermoduls zum fluidtechnischen Verbinden von Kühlelementen an einer Fahrzeugbatterie zu Temperierungszwecken.

Die eingangs genannte Aufgabe ist ferner gelöst mit einem Kühlsystem, insbesondere für Fahrzeugbatterien, mit mindestens einer Kühlplatte und mindestens einem erfindungsgemäß ausgestalteten Fluidverteilermodul.

In einem derartigen Kühlsystem sind vorzugsweise mindestens zwei Fluidverteilermodule mittels der Modulschnittstellen miteinander verbunden, wobei insbesondere mindestens ein Fluidverteilermodul mit einer Endkappe auf der zweiten Modulschnittstelle verschlossen ist. Durch die Endkappe wird das Ende des Gesamtfluidkanals festgelegt, so dass eine Durchströmung nur noch durch das an diesem Fluidverteilermodul angeordnete Kühlelement, nämlich durch die Verteilerschnittstellen erfolgt. Die Endkappe ist beispielsweise als separates Bauteil oder einstückig mit dem dritten Abschnitt ausgebildet. Bei einstückiger Ausgestaltung ist der dritte Abschnitt bei der Herstellung verschlossen.

Weitere vorteilhafte Ausgestaltungen der Erfindung ergeben sich aus der folgenden Figurenbeschreibung und den abhängigen Unteransprüchen.

Es zeigen:
- Fig. 1: ein Ausführungsbeispiel eines Fluidverteilermoduls für ein modulares Temperiersystem in Schnittansicht,
- Fig. 2: ein Ausführungsbeispiel eines zweiten Abschnitts für ein Fluidverteilermodul,
- Fig. 3: ein weiteres Ausführungsbeispiel eines zweiten Abschnitts für ein Fluidverteilermodul,
- Fig. 4: ein Ausführungsbeispiel eines Teils eines Temperiersystems,
- Fig. 5: ein Ausführungsbeispiel eines Fluidverteilermoduls in Schnittansicht, und
- Fig. 6: ein Ausführungsbeispiel eines zweiten Abschnitts für ein Fluidverteilermodul.

In den verschiedenen Figuren der Zeichnung sind gleiche Teile stets mit denselben Bezugszeichen versehen.

Zu der anschließenden Beschreibung wird beansprucht, dass die Erfindung nicht auf die Ausführungsbeispiele und dabei nicht auf alle oder mehrere Merkmale von beschriebenen Merkmalskombinationen beschränkt ist, vielmehr ist jedes einzelne Teilmerkmal des/jedes Ausführungsbeispiels auch losgelöst von allen anderen im Zusammenhang damit beschriebenen Teilmerkmalen für sich und auch in Kombination mit beliebigen Merkmalen eines anderen Ausführungsbeispiels von Bedeutung für den Gegenstand der Erfindung.

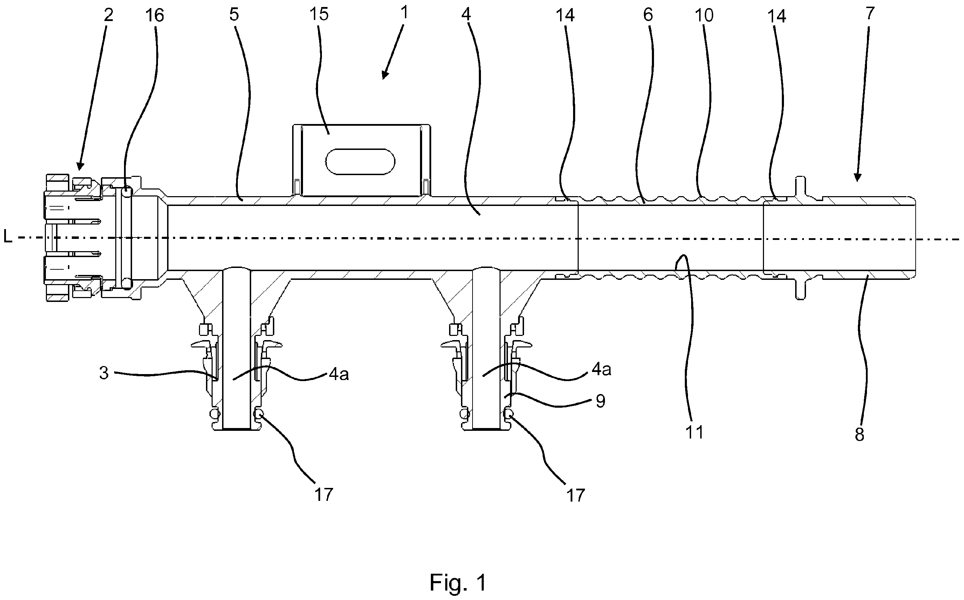

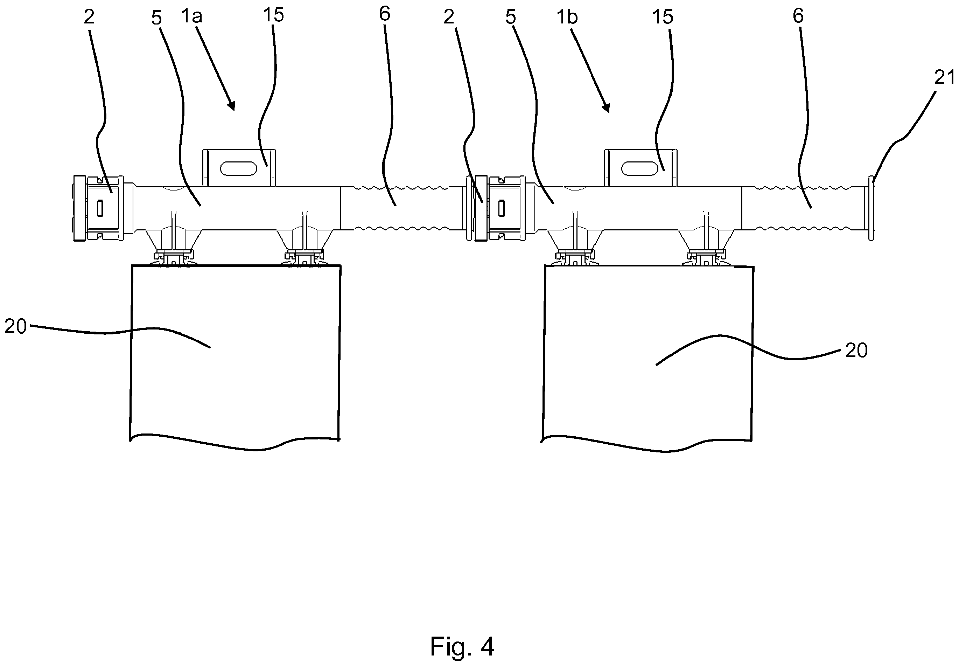

Fig. 1 zeigt ein Fluidverteilermodul 1 für ein modulares Temperiersystem eines Energiespeichers, insbesondere für ein Kühlsystem für eine Fahrzeugbatterie - nicht näher dargestellt. Das Fluidverteilermodul 1 weist mindestens eine erste Modulschnittstelle 2 zum Anschluss des Fluidverteilermoduls 1 an mindestens ein weiteres Fluidverteilermodul 1 auf - siehe beispielsweise Fig. 4. Die erste Modulschnittstelle 2 ist hier als aufnehmender Teil eines Steckverbinders ausgebildet.

Das Fluidverteilermodul 1 weist ferner mindestens eine erste Verteilerschnittstelle 3 zum Anschluss an ein - beispielsweise in Fig. 4 dargestelltes - Kühlelement 20 und mindestens einen Fluidkanal 4 auf. Die erste Verteilerschnittstelle 3 ist als einzusteckender Teil eines Steckverbinders ausgebildet. Ein erster Abschnitt 5 des Fluidverteilermoduls 1 ist aus einem ersten Material, hier Polypropylen, gebildet, während ein zweiter Abschnitt 6 aus einem von dem ersten Material verschiedenen, zweiten Material, hier ein thermoplastisches Elastomer, ausgebildet ist. Durch die Materialwahl weist der zweite Abschnitt 6 eine geringere Steifigkeit als der erste Abschnitt 5 auf, so dass sich der zweite Abschnitt 6 leichter verformen lässt als der erste Abschnitt 5. Der zweite Abschnitt 6 lässt sich während der Montage verformen, wodurch die Montage vereinfacht wird.

Dadurch, dass der erste Abschnitt 5 und der zweite Abschnitt 6 aneinander angeformt sind, sind der erste Abschnitt 5 und der zweite Abschnitt 6 einstückig ausgebildet. Das Fluidverteilermodul 1 weist ferner eine zweite Modulschnittstelle 7 auf, die als in einen aufnehmenden Teil eines Steckverbinders - gemäß der ersten Modulschnittstelle 2 - einsteckbarer Teil eines Steckverbinders ausgebildet ist.

Die zweite Modulschnittstelle 7 ist an einem dritten Abschnitt 8 ausgebildet, der an den zweiten Abschnitt 6, identisch wie an den ersten Abschnitt 5, angeformt ist. Der erste Abschnitt 5, der zweite Abschnitt 6 und der dritte Abschnitt 8 sind folglich einstückig ausgebildet. Ferner ist der dritte Abschnitt 8 aus dem ersten Material ausgebildet, so dass der zweite Abschnitt 6 aufgrund seiner geringeren Steifigkeit ein flexibles Verbindungsglied zwischen dem ersten Abschnitt 5 und dem dritten Abschnitt 8 darstellt. Die Länge des zweiten Abschnitts 6, insbesondere entlang der Längsachse L, entspricht etwa 30% der Gesamtlänge des Fluidverteilermoduls 1. Der erste Abschnitt 5, der zweite Abschnitt 6 und der dritte Abschnitt 8 begrenzen den Fluidkanal 4 zwischen der ersten Modulschnittstelle 2 und der zweiten Modulschnittstelle 7.

Der Fluidkanal 4 weist im Verlauf zwischen der ersten Modulschnittstelle 2 und der zweiten Modulschnittstelle 7 einen konstanten Querschnitt auf. Im ersten Abschnitt 5 ist zusätzlich zur ersten Verteilerschnittstelle 3 eine zweite Verteilerschnittstelle 9 zum Anschluss an ein - beispielhaft in Fig. 4 dargestelltes - Kühlelement 20 ausgebildet. Sowohl die erste Verteilerschnittstelle 3 als auch die zweite Verteilerschnittstelle 9 sind über Fluidkanalseitenpfade 4a mit geringerem Querschnitt mit dem Fluidkanal 4 verbunden. Die zweite Verteilerschnittstelle 9 ist, wie die erste Verteilerschnittstelle 3, als einzusteckender Teil eines Steckverbinders ausgebildet.

Der zweite Abschnitt 6 weist außenseitig eine Mehrzahl an Erhebungen 10 auf, wobei der zweite Abschnitt 6 an seiner den Fluidkanal 4 bildenden Innenfläche 11 vollständig glatt ausgebildet ist, so dass der Fluidkanal 4 zwischen erster Modulschnittstelle 2 und zweiter Modulschnittstelle 7 einen konstanten Querschnitt aufweist. Der zweite Abschnitt 6 ist als Wellrohr mit glatter Innenfläche 11 ausgebildet.

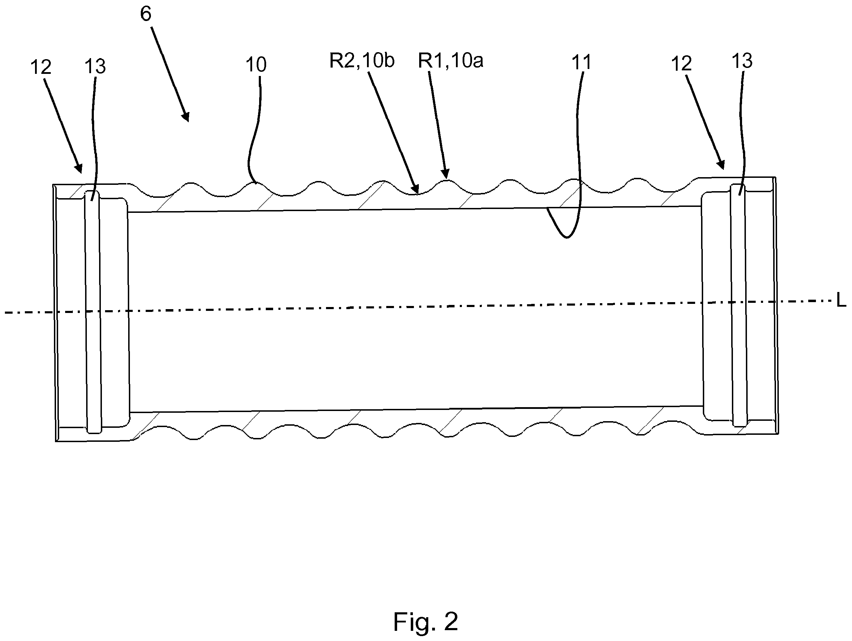

Fig. 2 zeigt ein Ausführungsbeispiel eines zweiten Abschnitts 6 gemäß dem Ausführungsbeispiel der Fig. 1. Die radial verlaufenden Erhebungen 10 sind bei diesem Ausführungsbeispiel als Wellen mit Wellenbergen 10a und Wellentälern 10b ausgebildet, wobei die Wellenberge 10a einen Radius R1 und die Wellentäler 10b einen Radius R2 aufweisen. Der Radius R2 ist von Radius R1 verschieden. Durch diese Ausgestaltung lässt sich die Druckfestigkeit des zweiten Abschnitts 6 vorteilhaft steigern. Es sind auch Ausführungsbeispiele vorgesehen, bei denen der Radius R1 und der Radius R2 identisch sind.

In dem Kontaktbereich 12 zum ersten Abschnitt 5 bzw. im Kontaktbereich 12 zum dritten Abschnitt 8 ist die Kontaktfläche durch die Ausbildung einer Nut 13 vergrößert, so dass eine vorteilhafte stoffschlüssige Verbindung realisiert ist. Die Nut 13 wirkt im montierten Zustand mit einer Feder 14 zusätzlich formschlüssig zusammen.

Gemäß Fig. 1 weist das Fluidverteilermodul 1 ferner einen Halterahmen 15 auf, mit dem das Fluidverteilermodul 1 befestigbar ist. An der zweiten Modulschnittstelle 7 ist zudem eine Dichtung 16 angeordnet, wobei an der ersten und zweiten Verteilerschnittstelle 3, 9 jeweils eine Dichtung 17 angeordnet ist. Es ist auch vorgesehen, dass die Dichtungen 16, 17 angeformt sind.

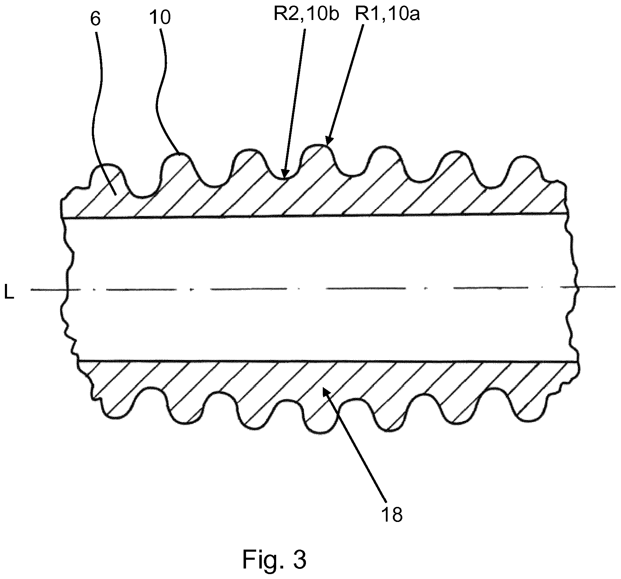

Fig. 3 zeigt ein Ausführungsbeispiel eines zweiten Abschnitts 6, dessen Wandstärke variiert, nämlich in Richtung des Mittelbereiches 18 ballig ausgebildet ist, so dass im Mittelbereich 18 die größte Wandstärke vorhanden ist, die in Richtung der beiden Endbereiche abnimmt. Die Radien R1 und R2 für Wellenberge 10a und Wellentäler 10b sind bei diesem Ausführungsbeispiel identisch.

Fig. 4 zeigt einen Teil eines Ausführungsbeispiels eines Temperiersystems 19 mit zwei als Kühlplatten ausgebildeten Kühlelementen 20 sowie einem ersten Fluidverteilermodul 1a und einem zweiten Fluidverteilermodul 1b, die die Kühlelemente 20 fluidtechnisch verbinden. Die Fluidverteilermodule 1a, 1b sind über die erste Modulschnittstelle 2 und die zweite Modulschnittstelle 7 miteinander verbunden. Das zweite Fluidverteilermodul 1b weist zudem an seiner zweiten Modulschnittstelle 7 eine Endkappe 21 auf, so dass die Strömung ausschließlich durch das mit dem zweiten Fluidverteilermodul 1b geführte Kühlelement 20 geleitet wird.

Die Kühlelemente 20 sind bereits vor der Montage der Fluidverteilermodule 1a, 1b in einem Rahmen - nicht dargestellt - fest angeordnet, so dass die Montage der Fluidverteilermodule 1a, 1b dadurch vereinfacht wird, dass der zweite Abschnitt 6 des ersten Fluidverteilermoduls 1a flexibel verformt werden kann.

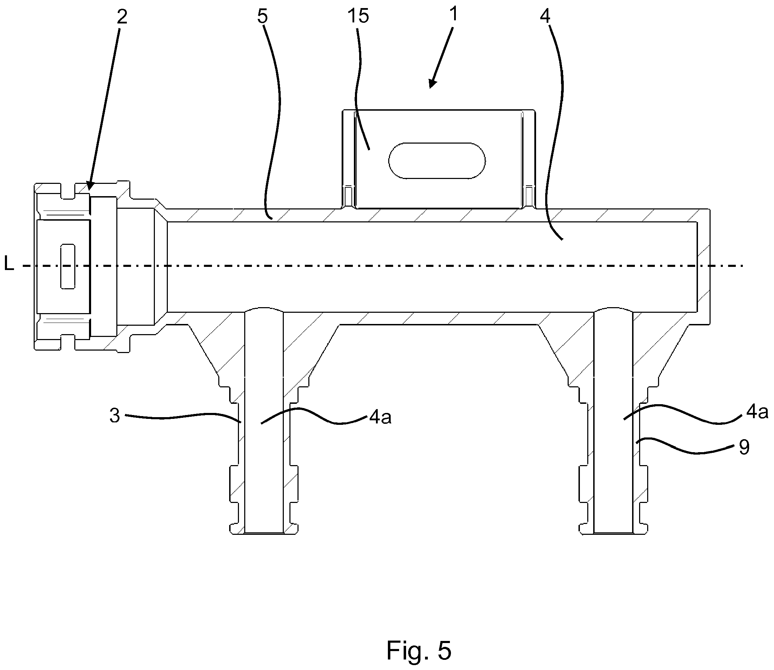

Fig. 5 zeigt ein weiteres Ausführungsbeispiel eines Fluidverteilermoduls 1 in einer geschnittenen Seitenansicht. Die Modulschnittstelle 2 ist über den Fluidkanal 4 und die Fluidkanalseitenpfade 4a mit den Verteilerschnittstellen 3, 9 verbunden. Entlang der Längsachse gegenüberliegend zur Modulschnittstelle 2 ist der Fluidkanal 4 endseitig verschlossen. Das Fluidverteilermodul 1 dient als letztes Modul eines Vor- oder Rücklaufs, so dass hier kein weiteres Fluidverteilermodul 1 durchströmt wird, sondern lediglich das angeschlossene Kühlelement - hier nicht dargestellt.

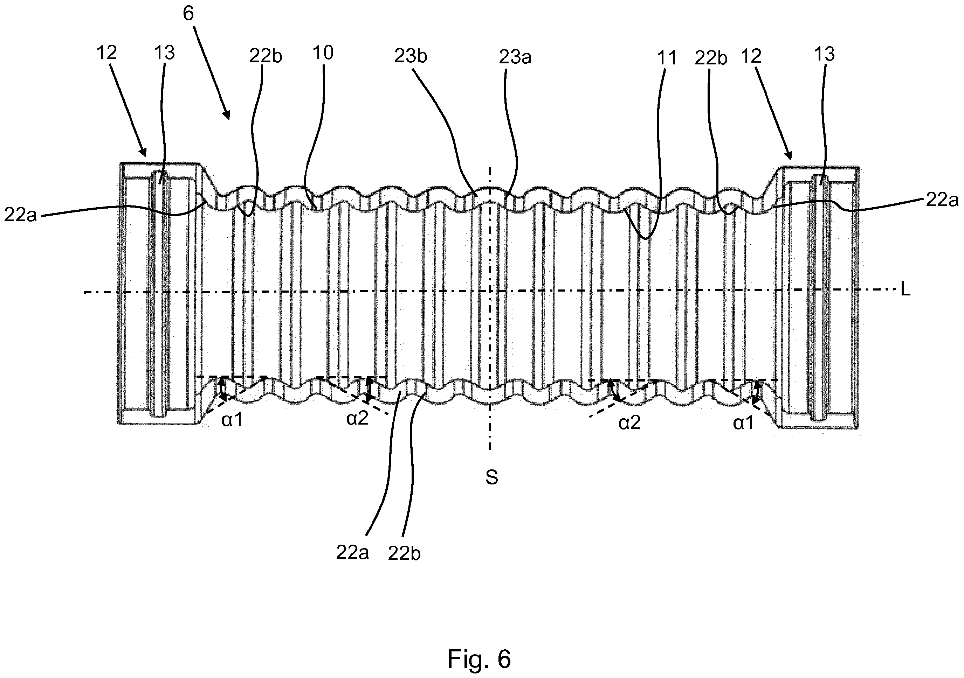

Fig. 6 zeigt ein Ausführungsbeispiel eines zweiten Abschnitts 6 für ein Fluidverteilermodul 1, beispielsweise gemäß dem Ausführungsbeispiel der Fig. 1. Die radial verlaufenden Erhebungen 10 sind bei diesem Ausführungsbeispiel aufgrund der konstanten Wandstärke auf der Innenseite und auf der Außenseite vorgesehen. Die jeweils benachbarten Flanken 22a, 22b weisen eine unterschiedliche Flankenneigung auf. Grundsätzlich sind die benachbarten Flanken 22a, 22b in Bezug auf die Längsachse L entgegengesetzt geneigt und weisen betragsmäßig einen unterschiedlichen Winkel α1, α2, also eine unterschiedliche Flankenneigung, auf. Die Flanke 22a mit dem Winkel α1 ist betragsmäßig steiler als die flachere Flanke 22b mit dem Winkel α2 zur Längsachse L.

Ausgehend von den beiden Enden des zweiten Abschnitts 6 sind die steileren Flanken 22a so ausgerichtet, dass sie den Enden gegenüberliegen. Die flacheren Flanken 22b sind von dem nächstliegenden Ende abgewandt, um eine Entformung in Richtung des jeweiligen Endes zu ermöglichen, also einen Innenkern in Richtung des Endes zu entfernen. Um die jeweilige Ausrichtung in Bezug auf das Ende zu gewährleisten, sind in der Mitte des zweiten Abschnitts zwei Flanken 23a, 23b mit identischer Flankenneigung angeordnet. Bei diesem Ausführungsbeispiel entsprechen die Flanken 23a, 23b jeweils einer flacheren Flanke 22b mit unterschiedlicher Ausrichtung. Zwischen den beiden Flanken 23a, 23b liegt eine Symmetrielinie S. Es ist auch vorgesehen, dass die Flanken 23a, 23b einer steileren Flanke 22a entsprechen. An den Flanken 23a, 23b bzw. an der Symmetrielinie S erfolgt eine Umkehr der abwechselnden Anordnung der Flanken 22a, 22b, ausgehend von dem jeweiligen Ende. Bei diesem Ausführungsbeispiel beginnt die alternierende Anordnung von steileren Flanken 22a und flacheren Flanken 22b ausgehend von jedem Ende mit jeweils einer steileren Flanke 22a. Die flacheren Flanken 22b sind jeweils in Entformungsrichtung - ausgehend von der Symmetrielinie S - in Richtung des jeweiligen Endes des zweiten Abschnitts 6 geneigt.

In dem Kontaktbereich 12 zum ersten Abschnitt 5 bzw. im Kontaktbereich 12 zum dritten Abschnitt 8 - beispielsweise gemäß Fig. 1 -ist die Kontaktfläche durch die Ausbildung einer Nut 13 vergrößert, so dass eine vorteilhafte stoffschlüssige Verbindung realisiert ist. Die Nut 13 wirkt im montierten Zustand mit einer Feder 14 zusätzlich formschlüssig zusammen.

Die Erfindung ist nicht auf die dargestellten und beschriebenen Ausführungsbeispiele beschränkt, sondern umfasst auch alle im Sinne der Erfindung gleichwirkenden Ausführungen. Es wird ausdrücklich betont, dass die Ausführungsbeispiele nicht auf alle Merkmale in Kombination beschränkt sind, vielmehr kann jedes einzelne Teilmerkmal auch losgelöst von allen anderen Teilmerkmalen für sich eine erfinderische Bedeutung haben. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sind. Dies bedeutet, dass grundsätzlich praktisch jedes Einzelmerkmal des Anspruchs 1 weggelassen beziehungsweise durch mindestens ein an anderer Stelle der Anmeldung offenbartes Einzelmerkmal ersetzt werden kann.

### Bezugszeichenliste

- 1: Fluidverteilermodul
- 1a: Erstes Fluidverteilermodul
- 1b: Zweites Fluidverteilermodul
- 2: Erste Modulschnittstelle
- 3: Erste Verteilerschnittstelle
- 4: Fluidkanal
- 4a: Fluidkanalseitenpfade
- 5: Erster Abschnitt
- 6: Zweiter Abschnitt
- 7: Zweite Modulschnittstelle
- 8: Dritter Abschnitt
- 9: Zweite Verteilerschnittstelle
- 10: Erhebungen
- 10a: Wellenberge
- 10b: Wellentäler
- 11: Innenfläche
- 12: Kontaktbereich
- 13: Nut
- 14: Feder
- 15: Halterahmen
- 16: Dichtung an 7
- 17: Dichtung an 3, 9
- 18: Mittelbereich
- 19: Temperiersystem
- 20: Kühlelement
- 21: Endkappe
- 22a: Steilere Flanke
- 22b: Flachere Flanke
- 23a: Flanke
- 23b: Flanke
- L: Längsachse
- S: Symmetrielinie
- R1: Radius Wellenberge
- R2: Radius Wellentäler
- α1: Winkel
- α2: Winkel

## Patentansprüche

1. Fluidverteilermodul (1) für ein modulares Temperiersystem (19) eines Energiespeichers, insbesondere ein Kühlsystem für Fahrzeugbatterien, mit mindestens einer ersten Modulschnittstelle (2) zum Anschluss an mindestens ein weiteres Fluidverteilermodul, mindestens einer ersten Verteilerschnittstelle (3) zum Anschluss an mindestens ein Kühlelement (20) und mindestens einem Fluidkanal (4), wobei
mindestens ein erster Abschnitt (5) des Fluidverteilermoduls (1) aus einem ersten Material und mindestens ein zweiter Abschnitt (6) des Fluidverteilermoduls (1) aus einem zweiten Material ausgebildet ist, wobei der zweite Abschnitt (6) eine geringere Steifigkeit als das erste Material aufweist, und wobei eine zweite Verteilerschnittstelle (9) zum Anschluss an ein Kühlelement (20) vorhanden ist,
**dadurch gekennzeichnet, dass**
die erste Verteilerschnittstelle (3) und die zweite Verteilerschnittstelle (9) im ersten Abschnitt (5) ausgebildet sind, und dass der erste Abschnitt (5) und der zweite Abschnitt (6) aneinander stoffschlüssig angeformt sind.

2. Fluidverteilermodul (1) nach Anspruch 1,
**dadurch gekennzeichnet, dass**
eine zweite Modulschnittstelle (7) zum Anschluss an ein weiteres Fluidverteilermodul vorhanden ist, insbesondere dass die zweite Modulschnittstelle (7) am zweiten Abschnitt (6) oder an einem dritten Abschnitt (8) ausgebildet ist.

3. Fluidverteilermodul (1) nach Anspruch 2,
**dadurch gekennzeichnet, dass**
der Fluidkanal (4) zumindest zwischen erster Modulschnittstelle (2) und zweiter Modulschnittstelle (7) einen konstanten Querschnitt aufweist.

4. Fluidverteilermodul (1) nach einem der vorhergehenden Ansprüche,
**dadurch gekennzeichnet, dass**
ein dritter Abschnitt (8) ausgebildet ist, und dass der dritte Abschnitt (8) angeformt ist, bevorzugt dass der zweite Abschnitt (6) zwischen dem ersten Abschnitt (5) und dem dritten Abschnitt (8) angeordnet ist, insbesondere dass der dritte Abschnitt (8) aus dem ersten Material ausgebildet ist.

5. Fluidverteilermodul (1) nach einem der vorhergehenden Ansprüche,
**dadurch gekennzeichnet, dass**
mindestens ein Abschnitt der ersten Verteilerschnittstelle (3) und/oder der zweiten Verteilerschnittstelle (9) aus dem zweiten Material ausgebildet ist.

6. Fluidverteilermodul (1) nach einem der vorhergehenden Ansprüche,
**dadurch gekennzeichnet, dass**
der zweite Abschnitt (6) außenseitig und/oder innenseitig eine Mehrzahl von Erhebungen (10), insbesondere Rippen oder Wellen, aufweist, insbesondere dass der zweite Abschnitt (6) an seiner den Fluidkanal (4) begrenzenden Innenfläche (11) glatt ausgebildet ist.

7. Fluidverteilermodul nach Anspruch 6,
**dadurch gekennzeichnet, dass**
die Erhebungen (10) in Form von Wellen unterschiedliche Radien (R1, R2) für Wellenberge (10a) und Wellentäler (10b) aufweisen, insbesondere dass der Abstand zwischen zwei Wellenbergen (10a) zwischen 3 mm und 10 mm beträgt.

8. Fluidverteilermodul nach Anspruch 6 oder 7,
**dadurch gekennzeichnet, dass**
die Erhebungen (10) in Form von Wellen unterschiedliche Flankenneigungen (α1, α2) an benachbarten Flanken (22a, 22b) oder unterschiedlichen Flankenradien an benachbarten Flanken (22a, 22b) aufweisen, bevorzugt dass die Erhebungen (10) zumindest innenseitig angeordnet sind, insbesondere dass mindestens zwei benachbarte Flanken (23a, 23b) im Verlauf des zweiten Abschnitts (6) mit gleicher Flankenneigung oder gleichem Flankenradius an gegenüberliegenden Flanken (22a, 22b) vorgesehen ist.

9. Fluidverteilermodul (1) nach einem der vorhergehenden Ansprüche,
**dadurch gekennzeichnet, dass**
der zweite Abschnitt (6) eine zumindest abschnittsweise, insbesondere zwischen Wellentälern (10b), variierende Wandstärke aufweist, vorzugsweise in Richtung eines Mittelbereiches (18) ballig ausgebildet ist.

10. Fluidverteilermodul (1) nach einem der vorhergehenden Ansprüche,
**dadurch gekennzeichnet, dass**
das erste Material Polypropylen (PP), bevorzugt mit einem Anteil von bis zu 50% Glasfasern, ist, oder dass das erste Material Polyamid 6.10 (PA 6.10) oder Polyamid 12 (PA 12) ist.

11. Fluidverteilermodul (1) nach einem der vorhergehenden Ansprüche,
**dadurch gekennzeichnet, dass**
das zweite Material ein thermoplastisches Elastomer (TPE) ist, vorteilhaft mit einer Härte Shore A im Bereich zwischen 40 und 95, bevorzugt im Bereich zwischen 60 und 90, oder dass das zweite Material ein thermoplastisches Elastomer auf Urethanbasis (TPU) ist, bevorzugt mit einer Glasfaserfüllung, besonders bevorzugt mit einer Härte Shore D größer gleich 50, oder dass das zweite Material ein thermoplastisches Polyolefin (TPO) oder ein thermoplastisches Polyolefine-Vulkanisat (TPV) ist, insbesondere mit einer Härte Shore D größer gleich 35, bevorzugt 40.

12. Fluidverteilermodul (1) nach einem der vorhergehenden Ansprüche,
**dadurch gekennzeichnet, dass**
das zweite Material strahlvernetzt ist.

13. Verwendung mindestens eines aus mindestens zwei Komponenten hergestellten Fluidverteilermoduls (1) nach einem der Ansprüche 1 bis 12 zum fluidtechnischen Verbinden von Kühlelementen (20) an einer Fahrzeugbatterie zu Temperierungszwecken.

14. Temperiersystem (19), insbesondere für Fahrzeugbatterien, mit mindestens einem Kühlelement (20) und mindestens einem Fluidverteilermodul (1)
**dadurch gekennzeichnet, dass**
das Fluidverteilermodul (1) nach einem der Ansprüche 1 bis 12 ausgebildet ist.

15. Temperiersystem (19) nach Anspruch 14,
**dadurch gekennzeichnet, dass**
mindestens zwei Fluidverteilermodule (1a, 1b) miteinander verbunden sind, bevorzugt eine Mehrzahl von Fluidverteilermodulen, insbesondere dass mindestens ein Fluidverteilermodul (1b) mit einer Endkappe (21) auf der zweiten Modulschnittstelle (7) verschlossen ist.

## Claims

1. Fluid distributor module (1) for a modular temperature control system (19) of an energy store, in particular a cooling system for vehicle batteries, having at least one first module interface (2) for connection to at least one further fluid distributor module, having at least one first distributor interface (3) for connection to at least one cooling element (20), and having at least one fluid channel (4), wherein at least one first section (5) of the fluid distributor module (1) is formed from a first material and at least one second section (6) of the fluid distributor module (1) is formed from a second material, wherein the second section (6) has a lower stiffness than the first material, and wherein a second distributor interface (9) is provided for connection to a cooling element (20),
**characterized in that**
the first distributor interface (3) and the second distributor interface (9) are formed in the first section (5), and **in that** the first section (5) and the second section (6) are integrally formed cohesively on one another.

2. Fluid distributor module (1) according to Claim 1,
**characterized in that**
a second module interface (7) for connection to a further fluid distributor module is provided, in particular **in that** the second module interface (7) is formed on the second section (6) or on a third section (8).

3. Fluid distributor module (1) according to Claim 2,
**characterized in that**
the fluid channel (4) has a constant cross section at least between the first module interface (2) and second module interface (7).

4. Fluid distributor module (1) according to any of the preceding claims,
**characterized in that**
a third section (8) is formed, and **in that** the third section (8) is integrally formed, preferably **in that** the second section (6) is arranged between the first section (5) and the third section (8), in particular **in that** the third section (8) is formed from the first material.

5. Fluid distributor module (1) according to any of the preceding claims,
**characterized in that**
at least one section of the first distributor interface (3) and/or of the second distributor interface (9) is formed from the second material.

6. Fluid distributor module (1) according to any of the preceding claims,
**characterized in that**
the second section (6) has a multiplicity of elevations (10), in particular ribs or undulations, on the outside and/or on the inside, in particular **in that** the second section (6) is of smooth form on its inner surface (11) which delimits the fluid channel (4).

7. Fluid distributor module (1) according to Claim 6,
**characterized in that**
the elevations (10) in the form of undulations have different radii (R1, R2) for undulation peaks (10a) and undulation troughs (10b), in particular **in that** the spacing between two undulation peaks (10a) is between 3 mm and 10 mm.

8. Fluid distributor module (1) according to Claim 6 or 7,
**characterized in that**
the elevations (10) in the form of undulations have different flank inclinations (α1, α2) on adjacent flanks (22a, 22b) or different flank radii on adjacent flanks (22a, 22b), preferably **in that** the elevations (10) are arranged at least on the inside, in particular **in that** at least two adjacent flanks (23a, 23b) in the course of the second section (6) are provided with identical flank inclination or identical flank radius on opposite flanks (22a, 22b).

9. Fluid distributor module (1) according to any of the preceding claims,
**characterized in that**
the second section (6) has a wall thickness which varies at least in certain sections, in particular between undulation troughs (10b), preferably is of crowned form in the direction of a central region (18).

10. Fluid distributor module (1) according to any of the preceding claims,
**characterized in that**
the first material is polypropylene (PP), preferably with a fraction of up to 50% glass fibres, or **in that** the first material is polyamide 6.10 (PA 6.10) or polyamide 12 (PA 12).

11. Fluid distributor module (1) according to any of the preceding claims,
**characterized in that**
the second material is a thermoplastic elastomer (TPE), advantageously with a Shore A hardness in the range between 40 and 95, preferably in the range between 60 and 90, or **in that** the second material is a urethane-based thermoplastic elastomer (TPU), preferably with a glass fibre filling, particularly preferably with a Shore D hardness greater than or equal to 50, or **in that** the second material is a thermoplastic polyolefin (TPO) or a thermoplastic polyolefin vulcanizate (TPV), in particular with a Shore D hardness greater than or equal to 35, preferably 40.

12. Fluid distributor module (1) according to any of the preceding claims,
**characterized in that**
the second material is radiation-crosslinked.

13. Use of at least one fluid distributor module (1), produced from at least two components, according to any of Claims 1 to 12 for fluidically connecting cooling elements (20) to a vehicle battery for temperature control purposes.

14. Temperature control system (19), in particular for vehicle batteries, having at least one cooling element (20) and at least one fluid distributor module (1),
**characterized in that**
the fluid distributor module (1) is designed according to any of Claims 1 to 12.

15. Temperature control system (19) according to Claim 14,
**characterized in that**
at least two fluid distributor modules (1a, 1b) are connected to one another, preferably a multiplicity of fluid distributor modules, in particular **in that** at least one fluid distributor module (1b) is closed off by means of an end cap (21) on the second module interface (7).

## Revendications

1. Module distributeur de fluide (1) destiné à un système de régulation de température modulaire (19) d'un accumulateur d'énergie, en particulier un système de refroidissement destiné à des batteries de véhicules, ledit module comprenant au moins une première interface de module (2) destinée au raccordement à au moins un autre module distributeur de fluide, au moins une première interface de distributeur (3) destinée au raccordement à au moins un élément de refroidissement (20) et au moins un conduit de fluide (4),
au moins une première portion (5) du module distributeur de fluide (1) étant en un premier matériau et au moins une deuxième portion (6) du module distributeur de fluide (1) étant en un deuxième matériau, la deuxième portion (6) présentant une rigidité inférieure à celle du premier matériau, et une deuxième interface de distributeur (9) étant prévue pour le raccordement à un élément de refroidissement (20), **caractérisé en ce que**
la première interface de distributeur (3) et la deuxième interface de distributeur (9) sont formées dans la première portion (5), et **en ce que** la première portion (5) et la deuxième portion (6) sont formées l'une sur l'autre d'un seul tenant par liaison de matière.

2. Module distributeur de fluide (1) selon la revendication 1,
**caractérisé en ce que**
une deuxième interface de module (7) est prévue pour le raccordement à un autre module distributeur de fluide, en particulier **en ce que** la deuxième interface de module (7) est formée sur la deuxième portion (6) ou sur une troisième portion (8).

3. Module distributeur de fluide (1) selon la revendication 2,
**caractérisé en ce que**
le conduit de fluide (4) a une section transversale constante au moins entre la première interface de module (2) et la deuxième interface de module (7).

4. Module distributeur de fluide (1) selon l'une des revendications précédentes,
**caractérisé en ce que**
une troisième portion (8) est formée, et **en ce que** la troisième portion (8) est formée d'un seul tenant, de préférence **en ce que** la deuxième portion (6) est disposée entre la première portion (5) et la troisième portion (8), en particulier **en ce que** la troisième portion (8) est formée à partir du premier matériau.

5. Module distributeur de fluide (1) selon l'une des revendications précédentes,
**caractérisé en ce que**
au moins une portion de la première interface de distributeur (3) et/ou de la deuxième interface de distributeur (9) est formée à partir du deuxième matériau.

6. Module distributeur de fluide (1) selon l'une des revendications précédentes,
**caractérisé en ce que**
la deuxième portion (6) comporte du côté extérieur et/ou du côté intérieur une pluralité d'élévations (10), notamment de nervures ou d'ondulations, en particulier **en ce que** la deuxième portion (6) est lisse sur sa surface intérieure (11) délimitant le conduit de fluide (4).

7. Module distributeur de fluide (1) selon la revendication 6,
**caractérisé en ce que**
les élévations (10) en forme d'ondulations ont des rayons (R1, R2) différents pour des crêtes d'ondulation (10a) et des creux d'ondulation (10b), en particulier **en ce que** la distance entre deux crêtes d'ondulation (10a) est comprise entre 3 mm et 10 mm.

8. Module distributeur de fluide (1) selon la revendication 6 ou 7,
**caractérisé en ce que**
les élévations (10) en forme d'ondulations ont des inclinaisons de flanc (α1, α2) différentes au niveau de flancs adjacents (22a, 22b) ou des rayons de flanc différents au niveau de flancs adjacents (22a, 22b), de préférence **en ce que** les élévations (10) sont disposées au moins du côté intérieur, en particulier **en ce qu'**au moins deux flancs adjacents (23a, 23b) sont prévus dans le tracé de la deuxième portion (6) avec la même inclinaison de flanc ou le même rayon de flanc au niveau de flancs opposés (22a, 22b).

9. Module distributeur de fluide (1) selon l'une des revendications précédentes,
**caractérisé en ce que**
la deuxième portion (6) a une épaisseur de paroi qui varie au moins en partie, notamment entre les creux d'ondes (10b), et est convexe de préférence en direction d'une région médiane (18).

10. Module distributeur de fluide (1) selon l'une des revendications précédentes,
**caractérisé en ce que**
le premier matériau est du polypropylène (PP), de préférence avec une proportion de fibres de verre allant jusqu'à 50 %, ou **en ce que** le premier matériau est du polyamide 6.10 (PA 6.10) ou du polyamide 12 (PA 12).

11. Module distributeur de fluide (1) selon l'une des revendications précédentes,
**caractérisé en ce que**
le deuxième matériau est un élastomère thermoplastique (TPE), avantageusement de dureté Shore A comprise entre 40 et 95, de préférence comprise entre 60 et 90, ou **en ce que** le deuxième matériau est un élastomère thermoplastique à base d'uréthane (TPU), de préférence avec un remplissage de fibre de verre, de manière particulièrement préférée d'une dureté Shore D supérieure ou égale à 50, ou **en ce que** le deuxième matériau est une polyoléfine thermoplastique (TPO) ou un produit de vulcanisation de polyoléfine thermoplastique (TPV), en particulier de dureté Shore D supérieure ou égale à 35, de préférence 40.

12. Module distributeur de fluide (1) selon l'une des revendications précédentes,
**caractérisé en ce que**
le deuxième matériau est réticulé par rayonnement.

13. Utilisation d'au moins un module distributeur de fluide (1), produit à partir d'au moins deux composants, selon l'une des revendications 1 à 12 pour le raccordement fluidique d'éléments de refroidissement (20) à une batterie de véhicule à des fins de régulation de température.

14. Système de régulation de température (19), destiné en particulier à des batteries de véhicules, ledit système comprenant au moins un élément de refroidissement (20) et au moins un module distributeur de fluide (1),
**caractérisé en ce que**
le module distributeur de fluide (1) est conçu selon l'une des revendications 1 à 12.

15. Système de régulation de température (19) selon la revendication 14,
**caractérisé en ce que**
au moins deux modules distributeurs de fluide (1a, 1b) sont raccordés l'un à l'autre, de préférence une pluralité de modules distributeurs de fluide, en particulier **en ce qu'**au moins un module distributeur de fluide (1b) est fermé par un capuchon d'extrémité (21) sur la deuxième interface de module (7).
